# FASCICULE DE BREVET EUROPEEN

(11) **EP 3 356 169 B1**
(45) Date de publication et mention de la délivrance du brevet: **22.07.2020**
(21) Numéro de dépôt: 16788154.9
(22) Date de dépôt: 29.09.2016
(51) Int. Cl.: B60J 5/10, B60R 13/02

(54) **HAYON MUNI DE GARNITURE PERMETTANT UNE RÉDUCTION DE LA SÉRIGRAPHIE DE LA LUNETTE**
HECKKLAPPE MIT EINER VERKLEIDUNG ZUR ERMÖGLICHUNG DER REDUZIERUNG DES SIEBDRUCKS DES FENSTERS
TAILGATE PROVIDED WITH A TRIM THAT MAKES IT POSSIBLE TO REDUCE THE SILKSCREEN PRINTING OF THE WINDOW

(30) Priorité: 30.09.2015 FR 1559258
(43) Date de publication de la demande: 08.08.2018
(73) Titulaire: Compagnie Plastic Omnium, 69007 Lyon (FR)
(72) Inventeur: COUDRON, Philippe, 69300 Caluire et Cuire (FR)
(74) Mandataire: LLR
(86) Numéro de dépôt international: PCT/FR2016/052490
(87) Numéro de publication internationale: WO 2017/055756

(56) Documents cités:
- DE-A1-102011 000 063
- FR-A1- 2 768 085
- FR-A1- 2 927 876
- JP-A- 2014 131 896

## Description

La présente invention concerne le domaine technique des hayons de véhicule automobile.

On connaît, dans l'état de la technique, un caisson de hayon comprenant des parties inférieure et supérieure destinées chacune à être recouverte par une peau de carrosserie.

Les parties supérieure et inférieure sont reliées entre elles par l'intermédiaire de deux montants latéraux entre lesquels est généralement prévue une ouverture destinée à accueillir une lunette transparente.

La lunette est ainsi rapportée, principalement par collage, sur les montants latéraux, qui peuvent être réalisés en tôle. Le document FR 2 927 876 A1 divulgue un tel hayon de véhicule automobile.

On connaît aussi, par exemple de la demande WO2009056775, un montant réalisé en matière plastique. Ce type de montant constitue un profilé à section transversale ouverte, de type en U. Cette ouverture peut être fermée par un élément garantissant ainsi la continuité de la piste de collage.

On connaît aussi, un montant réalisé en matière plastique, constituant un profilé à section transversale ouverte, de type en U, mais comportant un plateau sensiblement parallèle à la lunette au niveau de l'extrémité du U se situant vers l'extérieur du véhicule.

Pour chacun de ces montants, la zone de collage et le montant seraient visibles depuis l'extérieur du véhicule au travers de la lunette transparente, ce qui ne serait pas acceptable pour les constructeurs de véhicules automobiles, et ce qui les oblige à utiliser des pièces pour masquer cette zone : pièce de style, garniture extérieure, déflecteur...

Pour masquer la zone de collage, il est également connu d'équiper les lunettes de sérigraphies au niveau de la zone de contact avec le montant. Une sérigraphie est un dépôt d'encre, généralement noire, sur la lunette, permettant de rendre opaque le verre de la lunette. Le problème, avec cette technique, et qu'il est nécessaire d'utiliser une surface sérigraphiée très large (au moins plus large que la piste de collage, voire plus large que le montant) pour masquer correctement la zone de collage.

Une telle surface élargie est non seulement peu esthétique, mais surtout, elle limite, encore plus que ne le fait le montant, la vue arrière pour le conducteur.

Par ailleurs, si la sérigraphie suffit à masquer la zone de collage, elle ne suffit pas toujours à masquer la paroi verticale du montant latéral lorsque l'on regarde de biais à travers la lunette.

Pour pallier ce dernier problème, il est connu d'utiliser des garnitures pour montant.

Une garniture est rapportée sur le montant latéral, et elle est positionnée et dimensionnée de façon à en masquer la paroi latérale du côté intérieur au véhicule. Ainsi, depuis l'extérieur du véhicule, on ne voit plus le montant, mais la garniture, qui peut avoir un aspect acceptable pour les constructeurs automobiles.

En revanche, il est souvent nécessaire d'avoir une sérigraphie étendue pour masquer le bord latéral du montant tourné vers le Y0 du véhicule et/ou sa garniture.

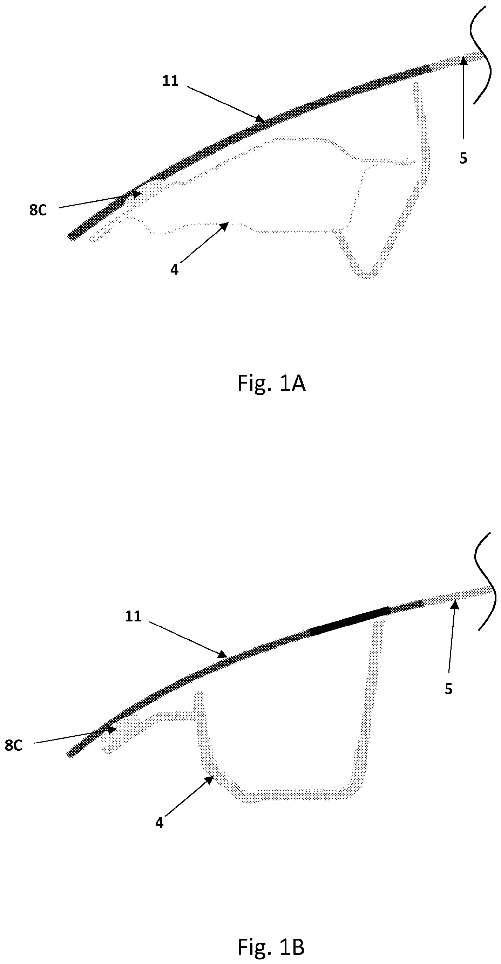

On connait aussi une solution utilisant une garniture comportant un retour partiel vers le bord latéral du montant opposé au Y0 du véhicule. Cependant, une telle solution engendre également une limitation de la vue arrière pour le conducteur, comme l'illustre la figure 1.

L'invention a pour but de remédier à ces inconvénients en fournissant un hayon équipé de montants munis de garniture permettant de masquer le montant jusqu'à la piste de collage de la lunette, sans réduire la rétrovision.

Ainsi, l'invention concerne un hayon selon la revendication 1.

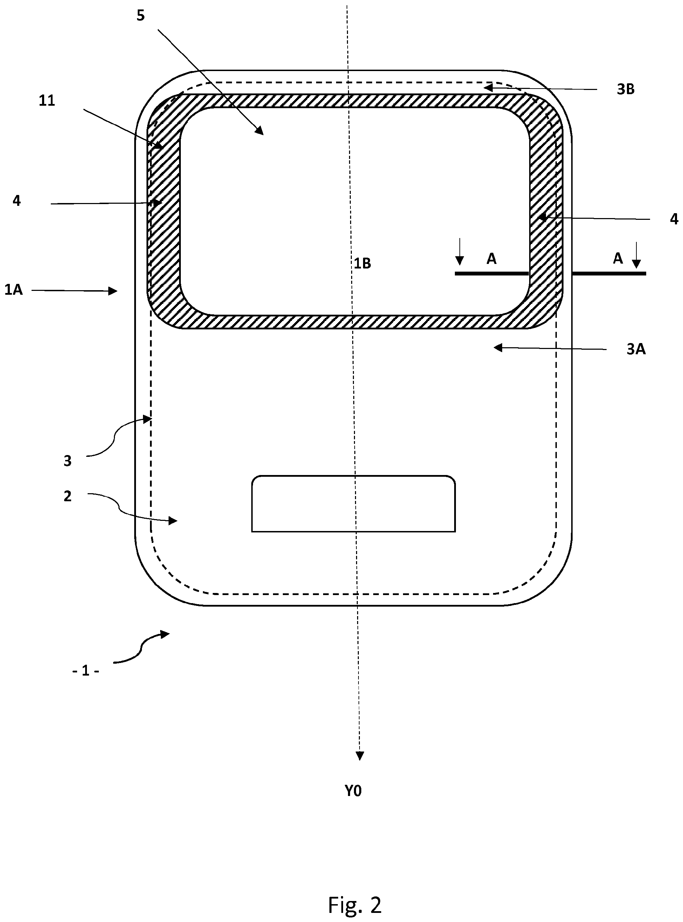

Grâce à l'invention, la sérigraphie de la lunette peut être réduite, de façon à ne masquer (au moins) que la zone de collage entre la lunette et le montant. Ceci permet d'équilibrer les bordures noires verticales et horizontales du tour de lunette. En effet, les sérigraphies supérieure et inférieure (selon l'axe Z du véhicule) sont généralement moins larges que les sérigraphies latérales, comme l'illustre la figure 2. L'invention permet ainsi d'harmoniser la largeur de la sérigraphie tout autour de la lunette.

De plus, la garniture permet d'assurer un masquage du montant latéral, tout en préservant le champ de vision arrière du conducteur, car l'intrusion de la garniture dans l'habitacle est limitée.

Le dispositif peut en outre comporter l'une ou plusieurs des caractéristiques suivantes, prises seules ou en combinaison :
- la garniture s'incurve de façon à fermer au moins 50% de l'ouverture du profilé ;
- la garniture s'incurve jusqu'à une zone destinée à former une piste d'étanchéité avec une caisse intérieure de véhicule ;
- la garniture s'incurve jusqu'à une piste de collage entre la lunette et le premier flanc ;
- la garniture est rapportée sur la surface du second flanc extérieure à l'ouverture ;
- la garniture est rapportée sur la surface du second flanc intérieure à l'ouverture ;
- la garniture est rapportée dans la continuité de la surface formant le second flanc ;
- le second flanc est plus court que le premier flanc ;
- la lunette comporte une sérigraphie apte à masquer une zone de collage entre la lunette et le montant ;
- le montant et/ou la garniture est en matière plastique.

L'invention sera mieux comprise à la lecture des figures annexées, qui sont fournies à titre d'exemples et ne présentent aucun caractère limitatif, dans lesquelles :
- la figure 1A illustre une section d'un montant latéral, en acier, d'un hayon selon l'art antérieur ;
- la figure 1B illustre une section d'un montant latéral, en plastique, d'un hayon selon l'art antérieur ;
- la figure 2 illustre une vue arrière d'un exemple de réalisation de hayon selon l'invention ;
- la figure 3 est un schéma selon une coupe transversale A-A d'un montant latéral de hayon selon l'invention ;
- les figures 4A à 4C sont des schémas selon une coupe transversale A-A d'un montant latéral de hayon selon l'invention, illustrant trois modes de réalisation dans lesquels la garniture s'incurve vers le flanc externe de façon plus ou moins importante ; et
- les figures 5A à 5C sont des schémas selon une coupe transversale A-A d'un montant latéral de hayon selon l'invention, illustrant trois modes de réalisation d'insertion de la garniture sur le flanc interne du montant.

On se réfère maintenant à la figure 2, qui illustre un mode de réalisation du hayon 1 selon l'invention.

Ce hayon 1 en matières plastiques comprend une peau extérieure 2 et un caisson intérieur 3. Le caisson 3 comprend une partie inférieure 3A et une partie supérieure 3B reliées entre elles par l'intermédiaire de deux montants latéraux 4. Une lunette 5 est rapportée sur les montants.

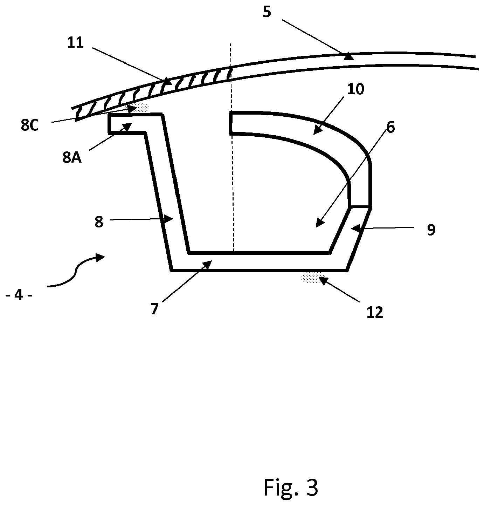

On se réfère maintenant à la figure 3, qui illustre un mode de réalisation d'un montant 4 selon l'invention. La figure 3 représente une section transversale d'un montant 4.

Le montant 4 constitue un profilé à section transversale ouverte, de type en U, dont l'ouverture 6 est tournée vers la lunette 5. Avantageusement, le montant 4 est en matière plastique.

Le profilé comporte ainsi une base 7 formant le fond du U, et située vers l'avant du véhicule lorsque le hayon 1 est en position fermée sur le véhicule : l'ouverture du U du montant 4 est ainsi dirigée vers l'arrière du véhicule dans cette position.

La base 7 est munie de deux flancs latéraux 8 et 9.

Le premier flanc 8 est situé sur le bord latéral 1A du hayon 1, opposé au Y0. Ce premier flanc 8 part de la base 7 en direction de la lunette 5. Ce flanc 8 constitue la paroi du montant 4 opposée au Y0 du véhicule lorsque le hayon 1 est monté sur le véhicule. Ce flanc 8 est muni d'un rebord 8A comportant une piste de collage 8B avec la lunette 5.

Avantageusement, la lunette comporte une sérigraphie 11 apte à masquer la piste de collage 8B et la colle 8C depuis l'extérieur de véhicule.

Le second flanc 9 est orienté vers le milieu 1B du hayon 1, c'est-à-dire vers le Y0 du véhicule. Ce second flanc 9 part de la base 7 en direction de la lunette 5. Ce second flanc 9 constitue la paroi du montant 4 tournée vers l'axe Y0 du véhicule lorsque le hayon 1 est monté sur le véhicule.

De préférence, ce second flanc 9 est plus court que le premier flanc 8, formant ainsi, avec la base 7, une section en « U incomplète », comme l'illustre les figures 3 à 5C.

On rapporte sur ce second flanc 9 une garniture 10 prolongeant le flanc 9 et s'incurvant, à l'opposée du Y0 du véhicule, vers le premier flanc 8 de façon à fermer au moins partiellement l'ouverture 6 du profilé. Avantageusement, la garniture 10 est en matière plastique.

La garniture 10 est rapportée sur le second flanc 9 en limitant son déport intérieur. On appelle déport intérieur de la garniture un décalage dirigé vers le Y0 du véhicule. Ainsi, la garniture 10 est rapportée sur le second flanc 9 de façon à ne pas s'étendre davantage que le second flanc 9 lui-même vers le Y0 du véhicule.

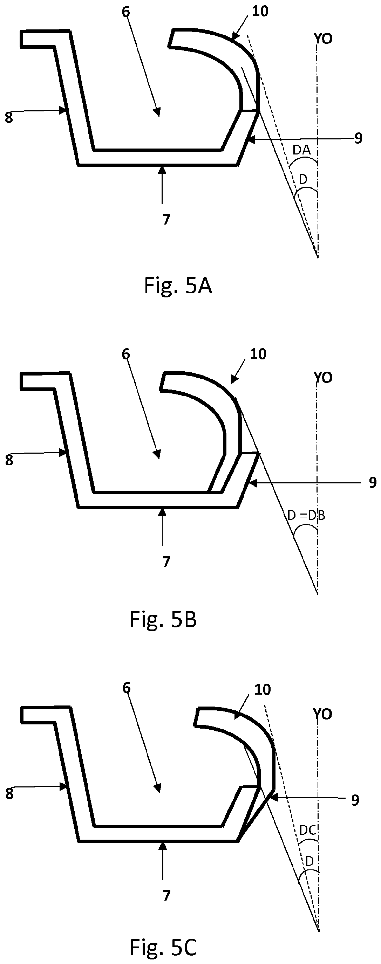

Un tel déport intérieur affecte le champ de vision arrière (rétrovision). Le champ de vision arrière est le champ de vision du conducteur lorsqu'il regarde vers l'arrière du véhicule à travers la lunette arrière 5. On peut caractériser ce champ par l'angle de vision arrière, qui est l'angle D (figure 5A-5C) défini entre le Y0 du véhicule et une droite sécante au Y0 vers l'avant du véhicule, et tangente à l'un des bords latéraux d'un montants orienté vers le Y0.

Ainsi, la garniture 10 est rapportée sur le second flanc 9 sans réduire de façon sensible le champ de vision arrière.

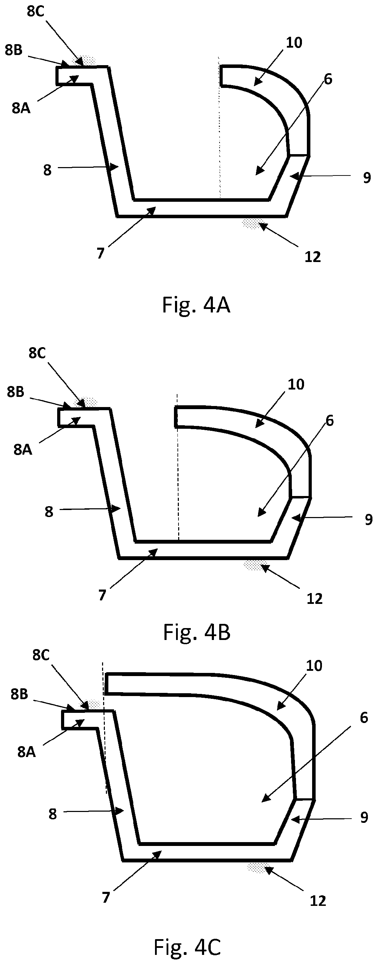

De façon avantageuse (figure 4A), la garniture 10 s'incurve vers le premier flanc 8 de façon à fermer au moins 50% de l'ouverture 6 du profilé. De cette façon, la garniture 10 masque le montant 4, et permet une réduction de la surface occupée par la sérigraphie 11.

Selon un mode de réalisation (figure 4B), la garniture 10 s'incurve jusqu'à une zone 12 destinée à former une piste d'étanchéité avec une caisse intérieure de véhicule.

Selon un autre mode de réalisation (figure 4C), la garniture 10 s'incurve jusqu'à la piste de collage 8B entre la lunette 5 et le premier flanc 8.

La garniture 10 peut être rapportée de différentes façons sur le second flanc 9. L'important étant que la garniture 10, une fois rapportée, ne réduit pas de façon sensible le champ de vision arrière. L'angle de vision arrière (sans garniture) est noté D sur les figures 5A à 5C.

Ainsi, comme l'illustre la figure 5A, la garniture 10 peut être rapportée sur le second flanc 9 au niveau de sa surface située à l'extérieure de l'ouverture. Dans ce cas, l'angle de vision arrière (noté DA) est très légèrement réduit, au point d'avoir un impact quasi nul sur le champ de vision du conducteur.

Comme l'illustre la figure 5B, la garniture 10 peut être rapportée sur le second flanc 9 au niveau de sa surface située à l'intérieure de l'ouverture. Dans ce cas, l'angle de vision arrière (noté DB) n'est pas affecté.

Enfin, comme l'illustre la figure 5C, la garniture 10 peut être rapportée sur le second flanc 9 dans la continuité de la surface formant le second flanc 9. Dans ce cas, l'angle de vision arrière (noté DC) est réduit, au point d'avoir un impact sur le champ de vision du conducteur. Mais cet impact est moindre qu'avec une garniture classique.

## Revendications

1. Hayon (1) de véhicule automobile comprenant au moins un montant (4) latéral sur lequel est rapportée une lunette (5), le montant (4) constituant un profilé à section transversale ouverte, de type en U, dont l'ouverture (6) est tournée vers la lunette (5), ledit profilé comportant une base (7) munie d'un premier (8) flanc latéral et d'un second (9) flanc latéral, le premier flanc (8) étant muni d'une surface (8A) comportant une piste de collage (8B) avec la lunette (5), **caractérisé en ce que** le second flanc (9) comporte une garniture (10) s'incurvant vers l'extérieur, par rapport à un plan médian longitudinal du véhicule, vers le premier flanc (8) de façon à fermer au moins partiellement l'ouverture (6) du profilé, la garniture (10) étant rapportée sur le second flanc (9) en prolongeant le second flanc (9) sans réduire le champ de vision arrière.

2. Hayon (1) selon la revendication 1, dans lequel la garniture (10) s'incurve de façon à fermer au moins 50% de l'ouverture (6) du profilé.

3. Hayon (1) selon la revendication 2, dans lequel la garniture (10) s'incurve jusqu'à une zone (12) destinée à former une piste d'étanchéité avec une caisse intérieure de véhicule.

4. Hayon (1) selon la revendication 2, dans lequel la garniture (10) s'incurve jusqu'à une piste de collage (8B) entre la lunette (5) et le premier flanc (8).

5. Hayon (1) selon l'une des revendications précédentes, dans lequel la garniture (10) est rapportée sur la surface du second flanc (9) extérieure à l'ouverture (6).

6. Hayon (1) selon l'une des revendications 1 à 4, dans lequel la garniture (10) est rapportée sur la surface du second flanc (9) intérieure à l'ouverture (6).

7. Hayon (1) selon l'une des revendications 1 à 4, dans lequel la garniture (10) est rapportée dans la continuité de la surface formant le second flanc (9).

8. Hayon (1) selon l'une des revendications précédentes, dans lequel le second flanc (9) est plus court que le premier flanc (8).

9. Hayon (1) selon l'une des revendications précédentes, dans lequel la lunette (5) comporte une sérigraphie (11) apte à masquer une zone de collage (8B) entre la lunette (5) et le montant (4).

10. Hayon (1) selon l'une des revendications précédentes, dans lequel le montant (4) et/ou la garniture (10) est en matière plastique.

## Patentansprüche

1. Heckklappe (1) eines Kraftfahrzeugs mit mindestens einem seitlichen Pfosten (4), an dem eine Heckscheibe (5) befestigt ist, wobei der Pfosten (4) ein U-förmiges Profil mit offenem Querschnitt bildet, dessen Öffnung (6) der Heckscheibe (5) zugewandt ist, wobei das Profil eine Basis (7) aufweist, die mit einer ersten (8) und einer zweiten (9) Seitenflanke versehen ist, wobei die erste Flanke (8) mit einer Oberfläche (8A) versehen ist, die eine Spur (8B) zum Verkleben mit der Heckscheibe (5) aufweist, **dadurch gekennzeichnet, dass** die zweite Flanke (9) eine Verkleidung (10) aufweist, die sich in Bezug auf eine Längsmittelebene des Fahrzeugs nach außen in Richtung der ersten Flanke (8) krümmt, um die Öffnung (6) des Profils zumindest teilweise zu verschließen, wobei die Verkleidung (10) an der zweiten Flanke (9) befestigt ist und die zweite Flanke (9) verlängert, ohne das hintere Sichtfeld zu verringern.

2. Heckklappe (1) nach Anspruch 1, wobei sich die Verkleidung (10) so krümmt, dass sie mindestens 50% der Profilöffnung (6) schließt.

3. Heckklappe (1) nach Anspruch 2, wobei sich die Verkleidung (10) in einen Bereich (12) zur Bildung einer Verkleidungsbahn mit einer inneren Fahrzeugkarosserie krümmt.

4. Heckklappe (1) nach Anspruch 2, wobei sich die Verkleidung (10) zu einer Klebespur (8B) zwischen der Heckscheibe (5) und der ersten Flanke (8) wölbt.

5. Heckklappe (1) nach einem der vorstehenden Ansprüche, bei der die Verkleidung (10) auf die Oberfläche der zweiten Flanke (9) außerhalb der Öffnung (6) aufgebracht ist.

6. Heckklappe (1) nach einem der Ansprüche 1 bis 4, wobei die Verkleidung (10) auf die Oberfläche der zweiten Flanke (9) innerhalb der Öffnung (6) aufgebracht ist.

7. Heckklappe (1) nach einem der Ansprüche 1 bis 4, bei der die Verkleidung (10) als Fortsetzung der die zweite Flanke (9) bildenden Fläche an der die zweite Flanke (9) bildenden Fläche befestigt ist.

8. Heckklappe (1) nach einem der vorhergehenden Ansprüche, bei dem die zweite Flanke (9) kürzer ist als die erste Flanke (8).

9. Heckklappe (1) nach einem der vorstehenden Ansprüche, bei der die Heckscheibe (5) einen Siebdruck (11) aufweist, der eingerichtet ist, eine Klebezone (8B) zwischen der Heckscheibe (5) und dem Pfosten (4) zu verdecken.

10. Heckklappe (1) nach einem der vorstehenden Ansprüche, bei der der Pfosten (4) und/oder die Verkleidung (10) aus Kunststoff hergestellt ist.

## Claims

1. Tailgate (1) of a motor vehicle comprising at least one side post (4) to which a window (5) is added, the post (4) constituting a U-shaped profile member with an open cross-section, in which the opening (6) is turned towards the window (5), said profile member including a base (7) provided with a first side flank (8) and a second side flank (9), the first flank (8) being provided with a surface (8A) comprising a bonding track (8B) with the window (5), **characterised in that** the second flank (9) includes a trim (10) curving towards the outside, relative to a longitudinal median plane of the vehicle, towards the first flank (8) so as to at least partially close the opening (6) of the profile member, the trim (10) being added to the second flank (9), extending the second flank (9), without reducing the rear field of vision.

2. Tailgate (1) according to claim 1, wherein the trim (10) curves so as to close at least 50 % of the opening (6) of the profile member.

3. Tailgate (1) according to claim 2, wherein the trim (10) curves up to an area (12) intended to form a sealing track with an inner vehicle body.

4. Tailgate (1) according to claim 2, wherein the trim (10) curves up to a bonding track (8B) between the window (5) and the first flank (8).

5. Tailgate (1) according to one of the preceding claims, wherein the trim (10) is added to the surface of the second flank (9) outside the opening (6).

6. Tailgate (1) according to one of claims 1 to 4, wherein the trim (10) is added to the surface of the second flank (9) inside the opening (6).

7. Tailgate (1) according to one of claims 1 to 4, wherein the trim (10) is added in the continuity of the surface forming the second flank (9).

8. Tailgate (1) according to one of the preceding claims, wherein the second flank (9) is shorter than the first flank (8).

9. Tailgate (1) according to one of the preceding claims, wherein the window (5) comprises silkscreen printing (11) designed to hide a bonding area (8B) between the window (5) and the post (4).

10. Tailgate (1) according to one of the preceding claims, wherein the post (4) and/or the trim (10) are made of plastic.
